Europäisches Patentamt

European Patent Office

Office européen des brevets

(19)

(11) Veröffentlichungsnummer: **0 519 993 B1**

(12) **EUROPÄISCHE PATENTSCHRIFT**

(45) Veröffentlichungstag der Patentschrift: **07.06.95**

(51) Int. Cl.⁶: **C08J 3/22**

(21) Anmeldenummer: **91906274.5**

(22) Anmeldetag: **12.03.91**

(86) Internationale Anmeldenummer:
**PCT/EP91/00462**

(87) Internationale Veröffentlichungsnummer:
**WO 91/13931 (19.09.91 91/22)**

(54) **VERFAHREN FÜR DIE HERSTELLUNG VON PIGMENTKONZENTRATEN.**

(30) Priorität: **13.03.90 IT 1966790**

(43) Veröffentlichungstag der Anmeldung:
**30.12.92 Patentblatt 92/53**

(45) Bekanntmachung des Hinweises auf die
Patenterteilung:
**07.06.95 Patentblatt 95/23**

(84) Benannte Vertragsstaaten:
**AT BE CH DE DK ES FR GB GR IT LI NL SE**

(56) Entgegenhaltungen:
EP-A- 0 013 872     EP-A- 0 259 960
EP-A- 0 277 598     EP-A- 0 364 634
EP-A- 0 365 399     EP-A- 0 365 400
EP-A- 0 423 590

WPIL, FILE SUPPLIER, AN=81-82602D [45],
Derwent Publications Ltd, (London, GB), &
JP-A-56 122 837

(73) Patentinhaber: **HOECHST ITALIA S.p.A.**
**Via M.U. Traiano 18**
**I-20100 Milano (IT)**

(72) Erfinder: **KRÖGER, Rolf**
**Via Panera, 12**
**I-21020 Luvinate (IT)**
Erfinder: **BENZONI, Roberto**
**Via Aldo Moro, 2**
**I-22050 Lomagna (IT)**
Erfinder: **JURLARO, Riccardo**
**Via G. Sertorio, 2**
**I-20052 Monza (IT)**
Erfinder: **GAZZEA, Sergio**
**Via R. Sanzio, 13**
**I-36060 Romano d'Ezzelino (IT)**
Erfinder: **MANDELLI, Renato**
**Via Milano, 22B**
**I-22050 Lomagna (IT)**

PATENT ABSTRACTS OF JAPAN, Band 7, Nr. 289 (C-202)[1434], 23. Dezember 1983, & JP-A-58 167 624

WPIL, FILE SUPPLIER, AN=86-315286 [48], Derwent Publications Ltd, (London, GB), & JP-A-61 233 041

WPIL, FILE SUPPLIER, AN=86-329499 [50], Derwent Publications Ltd, (London, GB), & JP-A-61 246 236

PATENT ABSTRACTS OF JAPAN, Band 11, Nr. 101 (C-413)[2548], 31. März 1987, & JP-A-61 250 034

PATENT ABSTRACTS OF JAPAN, Band 13, Nr. 107 (C-576)[3455], 14. März 1989, & JP-A-63 284 227

(74) Vertreter: Otto, Adalbert, Dr. et al
Hoechst Aktiengesellschaft,
Werk Kalle-Albert,
Zentrale Patentabteilung KA
D-65174 Wiesbaden (DE)

**Beschreibung**

Das Erfordernis, die Kosten ohne Qualitätsbeeinträchtigung zu senken, um sich im Wettbewerb behaupten zu können, veranlaßt die Industrie zur Erforschung von Methoden und Verfahren, um Produkte weitmöglichst automatisch, in kurzen Zeiten, mit weniger oder ohne Abfall zu gewinnen und dabei qualitativ das industrielle Niveau zu erhalten oder sogar zu verbessern. Aufgrund der langjährigen praktischen Erfahrung stellt die Verwendung von festen oder flüssigen Pigment- oder Farbstoffkonzentraten bei der Masseeinfärbung von Kunststoffen heute eine bewährte Technik dar.

Auch im Bereich der Lacke und Farbstoffe hat dieses Erfordernis, mit konkurrenzfähigen Kosten und einwandfreier Qualität zu arbeiten, zur Entwicklung von Pigment- oder Farbstoffkonzentraten geführt, die - unter anderem auch auf automatischen Anlagen - leicht in flüssige Farben mit zuverlässiger Pigmentdispergierung und Farbstärke eingearbeitet werden können.

Das hervorragendste Ergebnis ist im Bereich der Autoreparaturen zu sehen, wo flüssige Lacke in RAL-Farbtönen sogar von Autolackierern und Fachgeschäften mit einem besonderen Gerät automatisch auch in geringen Mengen zubereitet werden können.

Nach dem herkömmlichen System erfolgt die Einfärbung eines Pulverlackes durch Einarbeitung des Pigmentes zusammen mit den übrigen Bestandteilen in die Zusammensetzung, die dem normalen Verarbeitungsverfahren unterzogen wird, das aus dem Mischen in geeigneten Mischern und der Extrusion besteht, die die Dispergierung des Pigmentes und gleichzeitig die Homogenisierung aller Bestandteile in geschmolzenem Zustand gewährleistet

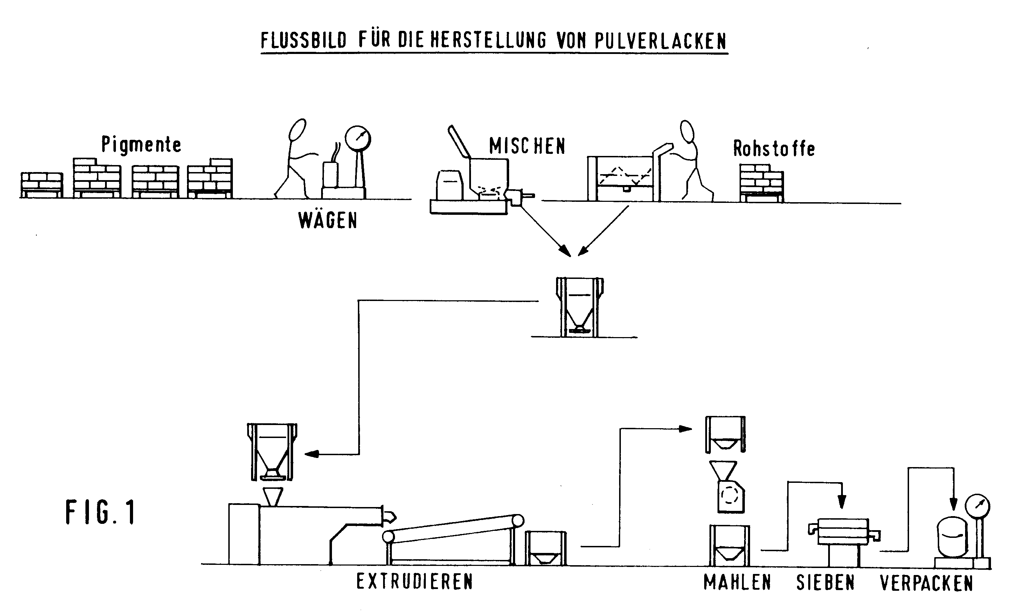

Das Extrudat wird anschließend in Körner oder Schuppen zerkleinert und dann zu Pulver zermahlen und gesiebt. Diese Vorgänge stellen die letzten Schritte der Pulverlackproduktion dar (s. beigefügte Fig. 1).

Die übliche Technik weist jedoch einige Nachteile auf. Darunter sind zu nennen:

1. Unregelmäßige Pigmentverteilung und damit ungleichmäßige Farbstärke.
2. Ungenügende Reproduzierbarkeit der Farbtöne.
3. Schwierige Dosierbarkeit des Pigmentes.
4. Probleme bei der computergestützten Farbnachstellung.
5. Umwelthygienische Probleme an den Produktionsstätten infolge schlechter Handhabbarkeit der Pigmente.

Diese Nachteile werden beseitigt durch die Verwendung von Pigmentkonzentraten bzw. Masterbatches, die in der üblichen Fachsprache abgekürzt auch als Master oder noch kürzer als MB bezeichnet werden.

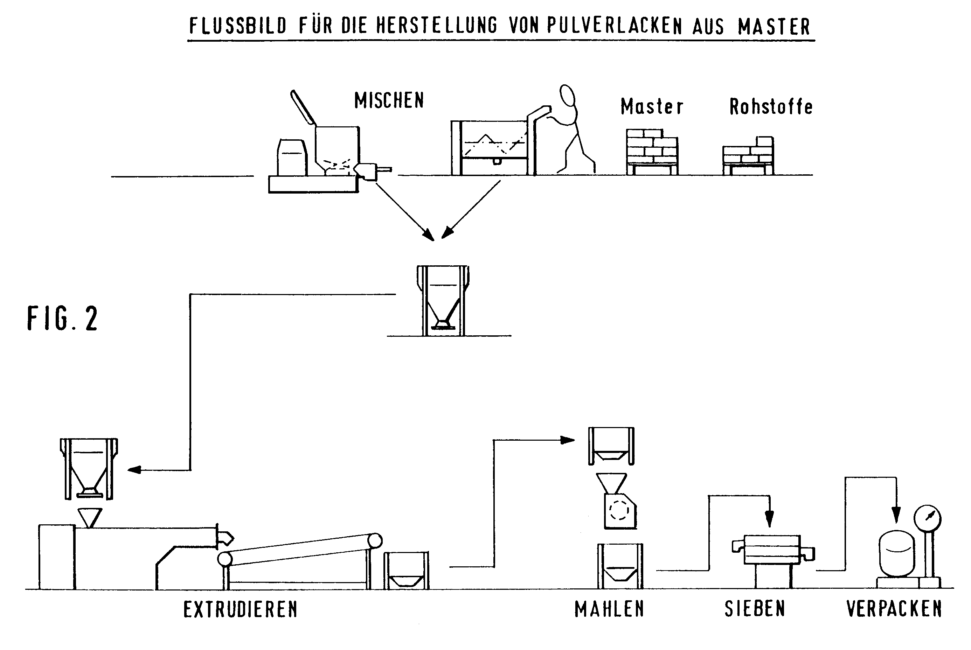

Einige Pulverlackhersteller machen von dem Verfahren Gebrauch, das im Bereich der lösemittelhaltigen Lacke oder bei der Masseeinfärbung von Kunststoffen zur Anwendung kommt, und verwenden Masterbatches, in denen die Pigmente in einem mit dem einzufärbenden Material kompatiblen Träger fein dispergiert sind, und die natürlich viele der ursprünglichen Eigenschaften der Ausgangspigmente bewahren (s. beigefügte Fig. 2). Der im Master vorhandene Anteil der Ausgangspigmente ist weit höher als für die Einfärbung des Formteils erforderlich wäre.

Der Masterbatch kann leicht in die Pulverlacke eingearbeitet werden und ist viel vorteilhafter in bezug auf Gleichmäßigkeit der Farbe am gefärbten Teil, Dispergierung des Pigmentes, höchste erreichbare Farbstärke, Verlauf und Glanz, als bei der herkömmlichen Einarbeitung von pulverförmigen Pigmenten.

An dieser Stelle ist es angebracht, auf das Verhalten der Dispergierbarkeit und Farbstärke der Pigmente hinzuweisen.

Dabei wird angenommen, daß die Pigmente direkt als solche oder in Form von Master in den gleichen Konzentrationen, unter den gleichen Bedingungen und im gleichen zu färbenden Material (Kunststoff, Lack, Druckfarbe) eingesetzt werden.

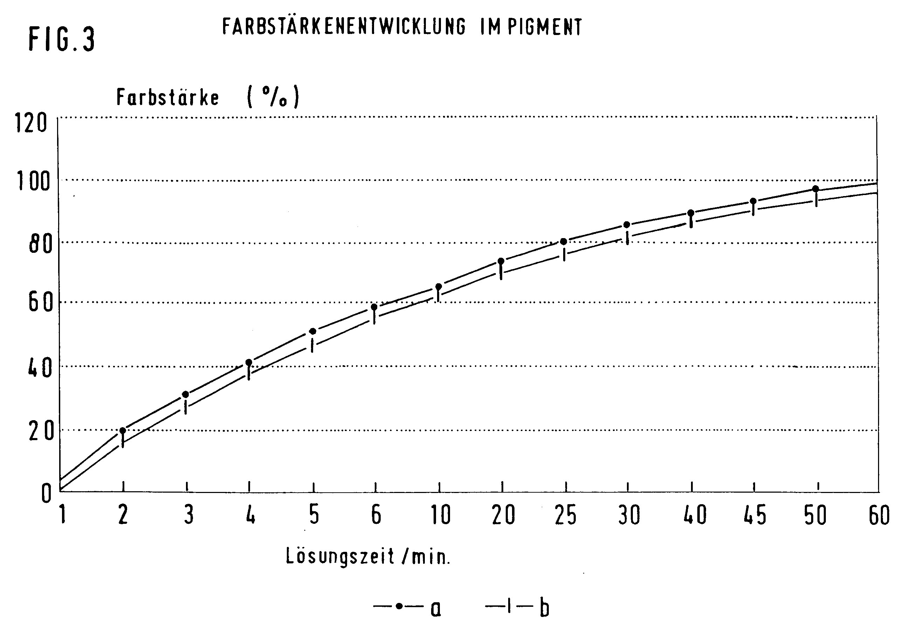

In der beigefügten Figur 3 ist der Farbstärkenverlauf von zwei Pigmenten a und b mit unterschiedlicher Dispergierbarkeit angegeben. Auf der Farbstärkenordinate ist 100 % der theoretische Höchstwert; auf der Abszisse ist die Auflösungszeit in Minuten der beiden auf dem gleichen Apparat verarbeiteten Pigmente aufgetragen.

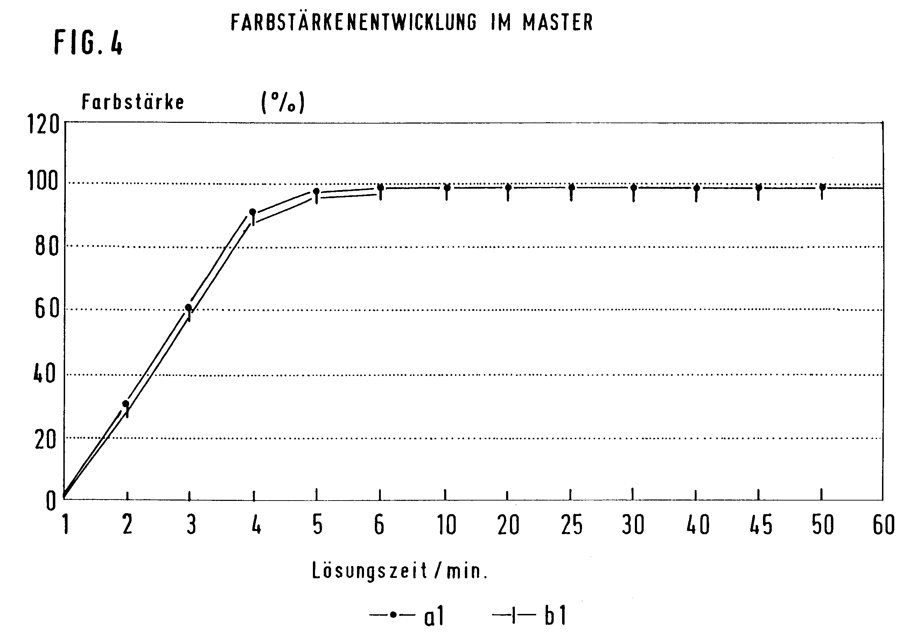

In der beigefügten Figur 4 ist der Farbstärkenverlauf der beiden Master a' und b', die die Pigmente a bzw. b enthalten, unter den gleichen Bedingungen wie oben angegeben.

Die Beispiele und damit die Kurvenbilder haben nur qualitative Bedeutung.

Da sich die Farbstärke gleichzeitig und progressiv mit der Dispergierung entwickelt, weil die beiden Eigenschaften voneinander abhängige Größen sind, entspricht dem Höchstwert der Farbstärke theoretisch der Höchstwert der Dispergierung und umgekehrt.

Das Einfärben eines Lackes mit einem Masterbatch bietet der Farbenfabrik normalerweise eine Reihe von Vorteilen, die dann indirekt auch bei der späteren Anwendung bemerkbar werden.

Unter den von der Verwendung von Masterbatches gebotenen Vorteilen sind folgende zu nennen:

a) Wahl eines Färbemittels, bei dem die Farbstärke und die Dispergierung bereits den für einen optimalen Färbeprozeß geforderten Höchstwerten entsprechen.

b) Wegfall der Pigmentkontrolle zwecks Gewährleistung gleichbleibender, sich wiederholender Eigenschaften, und damit Arbeits- und Zeitersparnis von qualifiziertem Personal.

c) Gleichbleibende, optimale Gleichmäßigkeit, Dispergierung und Farbstärke, keine Metamerie, Witterungsbeständigkeit und Lichtechtheit je nach Anwendung; diese Eigenschaften werden durch den Hersteller von Masterbatches gewährleistet.

d) Farbstärke und Dispergierung des Lackes werden nicht durch die Konstruktionsmerkmale und den Typ des Verarbeitungsextruders beeinflußt; dadurch ist volle Zuverlässigkeit bei jedem Verwender gesichert.

e) Nutzungsmöglichkeit eines wertvollen Farbrezeptierungsdienstes, der vom qualifizierten Masterbatch-Hersteller geboten werden kann.

f) In allen physikalischen Formen ist der Masterbatch rieselfähig, entwickelt keinen Staub und ist daher beim Abfüllen und Dosieren viel hygienischer als das bzw. die darin enthaltene(n) Pigment(e), was wesentlich zur Lösung der Umweltprobleme am Arbeitsplatz beiträgt.

g) Geringerer Verschleiß der Extruderinnenflächen.

Ein Masterbatch oder Pigmentkonzentrat besteht im allgemeinen hauptsächlich aus einem oder mehreren anorganischen und/oder organischen Pigmenten sowie aus Netzmitteln und/oder polymeren Trägern und eventuell anderen Hilfsmitteln.

Unser Ziel war die Erforschung einer mit den bereits bestehenden Verfahren wirtschaftlich konkurrenzfähigen Methode, mit der nach optimaler industrieller Technik Pigmentkonzentrate mit der höchstmöglichen Konzentration hergestellt werden können, deren Dispersionsgrad und Farbstärke sich den theoretischen Höchstwerten weitmöglichst annähern. Überdies sollten die oben genannten Eigenschaften nicht durch die Konstruktionsmerkmale oder den Typ des für die Pulverlackherstellung bzw. die Einfärbung anderer Erzeugnisse verwendeten Extruders beeinflußt werden.

Bei der Herstellung von Masterbatches kommen Geräte wie Extruder, Banbury-Plastifizierer, Walzenstühle, und Mischer zum Einsatz.

Die Verfahren, die auf diesen Geräten durchgeführt werden, erfordern im allgemeinen ziemlich hohe Investitionskosten und im betrachteten Fall konnten damit - besonders bei organischen Pigmenten - keine hohen Pigmentkonzentrationen bei Aufrechterhaltung einer wirklich guten Dispergierung und Farbstärke erreicht werden.

Die Erfindung betrifft ein Verfahren zur Herstellung von hochkonzentrierten, hochdispergierten Pigmentkonzentraten (Masters) mit höchster erreichbarer Farbstärke, dadurch gekennzeichnet, daß eine Mischung aus (A) einem oder mehreren Pigmenten, (B) einem oder mehreren Netzmitteln und (C) einem oder mehreren Polymerträgern in einem "adiabatischen" Schellmischer mit stufenlos regelbarer Geschwindigkeit während einer bestimmten Zeit hohen Scherkräften unterzogen wird, bis die Komponenten (B) und (C) durch die erzeugte Reibungswärme vollständig geschmolzen sind und die Farbstärke auf den höchst möglichen Wert gebracht worden ist.

Die Schwächen der traditionellen Technik können beseitigt werden durch die erfindungsgemäße Methode, die darauf beruht, daß zur Herstellung der ein- oder mehrpigmentigen Master ein "adiabatischer" Schnellmischer verwendet wird, der aus einem dicht verschließbaren Hohlkörper zur Aufnahme der Masse besteht, in dem sich ein von einem starken Elektromotor angetriebener Propeller- oder Schaufelrührer mit zweckmäßig orientierten Schaufeln und mit stufenlos veränderlicher Drehzahl befindet.

Die Form und die Größe des Hohlkörpers und des Propellerrührers, sowie die Motorleistung müssen im richtigen Verhältnis zueinander stehen.

Das Sytem verfügt über eine Schalttafel mit Timer, Strommesser, Thermometer und Drehmomentmesser, um die inneren Eigenschaften der Bestandteile zu bewahren und alle funktionellen Eingriffe des Bedienungsmannes zu ermöglichen.

Als konkrete Beispiele marktgängiger Geräte können die Turbolenzmischsysteme der DRAISWERKE GmbH Spezialmaschinenfabrik Mannheim (Bundesrepublik Deutschland), genannt werden.

Bei dem erfindungsgemäßen Verfahren werden die Bestandteile der herzustellenden Masterbatch-Masse (Pigment oder Pigmente mit Träger oder Trägern und/oder Netzmittel(n) und eventuellen weiteren Additiven) in den Mischer gegeben, der danach dicht verschlossen wird. Dann schaltet man den Turbolenzrührer ein, der die Masse durch die erzeugte Reibungswärme in einer bestimmten Zeit zum Schmelzen bringt, so daß das Pigment dispergiert wird.

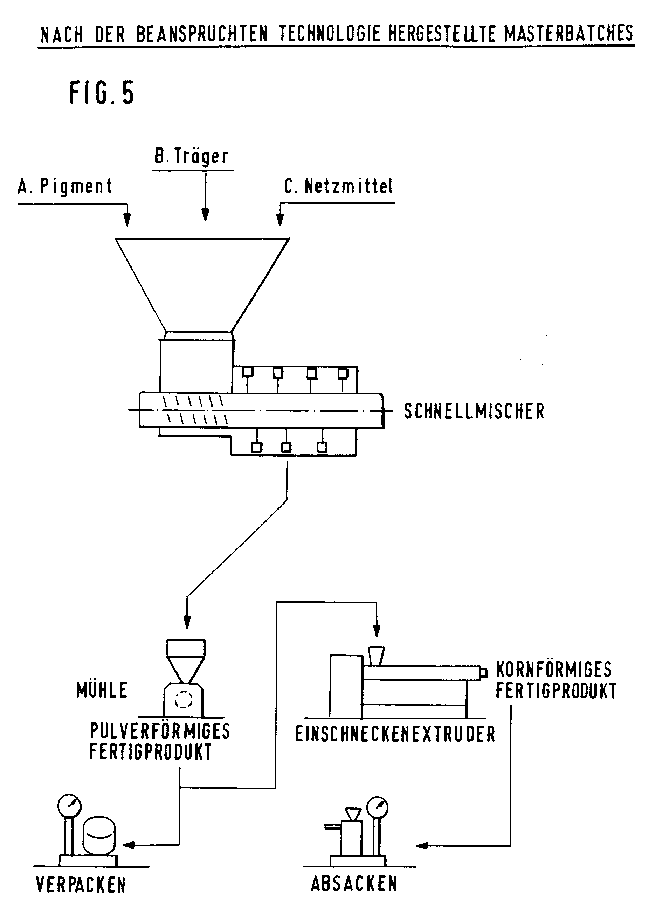

Das beanspruchte Verfahren ist in der beiliegeden Fig. 5 entsprechend dargestellt.

Durch diesen Vorgang wird eine homogene Schmelze gewonnen, bei der alle Phasen der Pigmentdispergierung vollständig erfolgt sind und die Farbstärke auf den höchstmöglichen Wert gebracht worden ist.

Es ist zu beachten, daß die Ausdrücke "Farbstärke" und "höchste Farbstärke" in dem vorliegenden Text im Sinn von DIN 5033, 53234 und 6169 zu verstehen sind.

Ein weiterer Vorteil des erfindungsgemäßen Verfahrens besteht in den einfacheren und kürzeren Reinigungsarbeiten, die sich vor allem bei häufigen Farbwechseln in der Produktion als günstig erweisen.

Im Unterschied zu scheinbar ähnlichen Methoden, wie z.B. das BASF-Patent DE 31 50 012 A1 vom 17.12.1981, dessen Verfahren in einem Turbomischer durchgeführt wird und sich auf die Herstellung einer physikalischen Mischung ohne Schmelzung beschränkt, ist nach dem erfindungsgemäßen Verfahren eine vollständige Schmelzung der Masse erforderlich.

In der EP-A 259 960 sind Additiv-Konzentrate beschrieben, die jedoch keine Pigmente enthalten. Das dort beschriebene Verfahren zur Darstellung dieser Additiv-Konzentrate ist zur Herstellung von Pigment-Konzentraten nicht geeignet.

Aus den japanischen Offenlegungsschriften 56-122 837 (zitiert nach Derwent AN-81-82 602 D) und 61-246 236 (zitiert nach Derwent AN-86 329 499) sind Verfahren zur Herstellung von Pigment-Masters bekannt, nach diesen Verfahren sind jedoch höchstens Pigmentkonzentrationen von jeweils 45 und 40 % erzielbar.

Mit dem erfindungsgemäßen Verfahren können im Master hohe Pigmentkonzentrationen (bis 65 % bei organischen und bis 85 % bei anorganischen Pigmenten) bei ausgezeichneten Dispergierungs- und Farbstärkeeigenschaften erzielt werden.

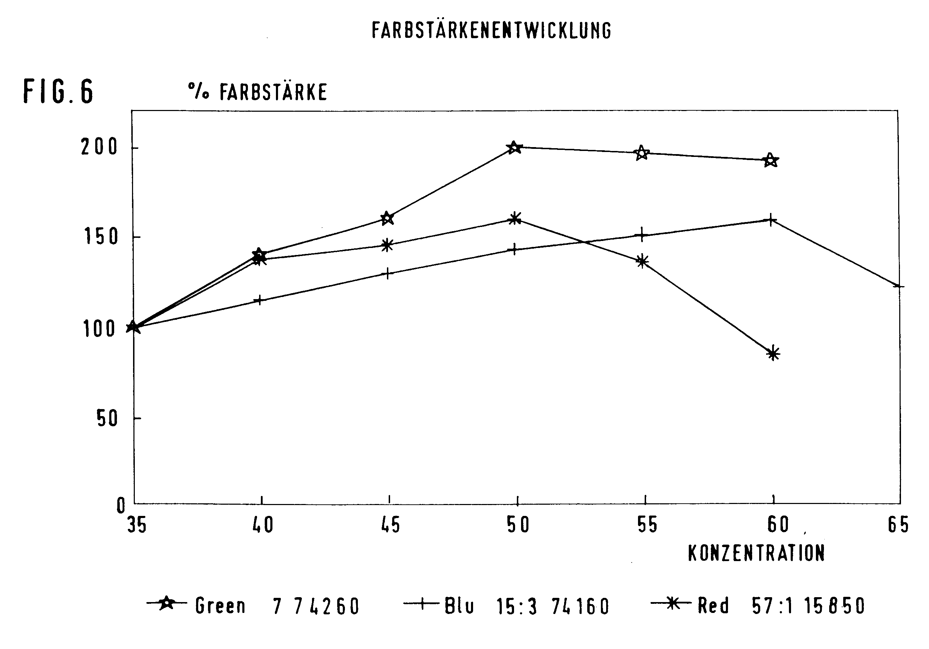

In der beigefügten Figur 6 ist die Farbstärkeentwicklung (Ordinate) in Abhängigkeit von der Konzentration (Abszisse) von drei Mastern dargestellt, in denen die folgenden Pigmente enthalten sind:

A - PIGMENT GREEN 7 74260
B - PIGMENT BLUE 15:3 74160
C - PIGMENT RED 57:1 15850

Die Zubereitung erfolgt nach dem adiabatischen Verfahren. Unter der Voraussetzung, daß die Farbstärke mit steigender Pigmentkonzentration bis zu einem Höchstwert progressiv nach einer nahezu linearen Funktion zunimmt, können bei Betrachtung der Schaubilder die folgenden Überlegungen angestellt werden:

1. Jeder Master ist durch einen eigenen Verlauf der Farbstärkenentwicklung und einen eigenen Spitzenpunkt gekennzeichnet.

2. Die Werte rechts von diesem Punkt folgen nicht dem linearen Verlauf und sind farbstärkenmäßig ungünstig.

Ausgehend von erfindungsgemäß hergestellten einpigmentigen Masterbatches können überdies Masterbatches mit gemischten Farbtönen und nach Wunsch (z. B. RAL-Farben) hergestellt werden; dazu wird ein einfacher Einschneckenextruder verwendet, in dem das Gemisch der kurz mit MB bezeichneten Master (s. beigefügtes Bild 7) homogenisiert wird.

Die in den Masterbatches eingesetzten Netzmittel können anionisch, nichtionisch, kationisch und elektrisch neutral sein und bestehen vorwiegend aus Verbindungen der folgenden Klassen:

a) Gesättigte und/oder ungesättigte Fettalkohole mit 6 - 20 Kohlenstoffatomen, die mit 6 - 70 Mol Ethylen- und/oder Propylenoxid reagiert haben.

b) Gesättigte und/oder ungesättigte Fettsäuren mit 14 - 20 Kohlenstoffatomen, die mit 6 - 70 Mol Ethylen- und/oder Propylenoxid reagiert haben.

c) Natürliche Harzsäuren, die mit 2 - 80 Mol Ethylen- und/oder Propylenoxid reagiert haben.

d) Gesättigte und/oder ungesättigte Fettamine mit 14 - 20 Kohlenstoffatomen je Mol, die mit 6 - 70 Ethylenoxid- und/oder Propylenoxid reagiert haben.

e) Reaktionsprodukte aus Alkylendiaminen mit 2 - 5 Kohlenstoffatomen und Ethylen- und/oder Propylenoxid im Verhältnis von 25 - 120 Mol je Amingruppe.

f) Reaktionsprodukte, dargestellt aus Glykolen und/oder Polyolen mit 4 - 10 Kohlenstoffatomen und Ethylen- und/oder Propylenoxid, mit Molekulargewichten von 200 bis 4.000.

g) Caprolactamderivate, die Hydroxyl- und/oder Carboxylgruppen enthalten, mit einem Molekulargewicht von 200 bis 50.000.

h) Reaktionsprodukte aus Tri- und/oder Di- und/oder Monoglyceriden und 6 - 120 Mol, je Hydroxylgruppe, Ethylenoxid- und/oder Propylenoxid.

i) Reaktionsprodukte aus Hydroxylsäuren mit 5 - 20 Kohlenstoffatomen und/oder deren Salze und 0 - 70 Ethylenoxid- und/oder Propylenoxidmolen je Hydroxylgruppe.

j) Reaktionsprodukte aus Alkylphenolen mit 12 - 24 Kohlenstoffatomen und 4 - 25 Mol je Ethylenoxid je Phenolgruppe.

k) Ammonium- oder Natriumalkylsulfonate und -alkylbenzolsulfonate.

l) Sulfosuccinatverbindungen.

m) Reaktionsprodukte aus Aminoalkoholen mit 2 - 20 Kohlenstoffatomen und 1 - 180 Mol Ethylen- und/oder Propylenoxid.

n) Reaktionsprodukte aus Aminosäuren und/oder deren Estern mit 2 - 70 Mol Ethylen- und/oder Propylenoxid.

o) Salze aus Diaminen und Monocarbonsäuren mit 14 - 20 Kohlenstoffatomen in der Kette.

p) Quartäre Ammoniumsalze (vorzugsweise Chlorid, Bromid, Iodid) aus aliphatischen Aminen mit 8 - 20 Kohlenstoffatomen.

q) Montansäuren mit 24 - 36 Kohlenstoffatomen in der Kette, und/oder deren Ester mit Ethandiol und/oder Butandiol und/oder Glycerin und/oder Pentaerythrit und/oder deren Calciumsalze.

r) Polyamidwachse, oxidierte und nicht oxidierte Polyethylenwachse, Polypropylenwachse, oxidierte und nicht oxidierte, auch durch Fischer-Tropsch-Synthese gewonnene Kohlenwasserstoffwachse.

s) Acrylhomoplymere.

t) Fluorpolymere

u) Gesättigte und/oder ungesättigte Fettsäureamide mit 14 - 22 Kohlenstoffatomen in der Kette.

v) Salze von Fettsäuren und Fettaminen aus dem gleichen Säureradikal mit 8 - 22 Kohlenstoffatomen (elektrisch neutrale Salze).

Die Netzmittel werden in einem Anteil von bis zu 75 % zugesetzt. Dabei können auch Mischungen mehrerer Netzmittel verwendet werden.

Unter den bei der Herstellung von Masterbatches verwendeten Trägern können aufgeführt werden:

a) Acrylcopolymere, die im Molekül eine oder mehrere Carboxyl-, Hydroxyl-, Amin-, Alkylamin-, Mercaptan-, Phosphonat-, Phosphit-, Phosphat-, Nitroso-, Al-Chelat-, oder Fluor- Gruppen enthalten können;

b) Polyester, Polyether, Polyurethane, Triazin- und Aldehydderivate, eventuell mit Gruppen wie unter a). gegebenenfalls in Mischung mit:

c) gewöhnlich in Lacken und Kunststoffen eingesetzten Hilfsmitteln, Verlaufmitteln, Antistatika, UV-Adsorbern, Antioxidantien, Entgasungsmitteln, und Gleitmitteln.

Der oder die Träger werden in einem Anteil von bis zu 75 % zugesetzt.

In den Beispielen für die Masterherstellung eingesetztes Material und spätere Verwendung des Masters:

PIGMENT GREEN 7 74260

PIGMENT BLUE 15:3 74160

PIGMENT WHITE 6 77891 (chloridhaltiges $TiO_2$)

PIGMENT RED 57:1 15850

PIGMENT YELLOW 34 77600

LAROPAL A 81, durch BASF AG (BRD) vermarktetes Aldehydharz

ERUCASÄUREAMID

| | |
|---|---|
| CAPA 231, | hydroxyliertes Polycaprolactam mit Molekulargewicht von ca. 3.000, vermarktet durch INTEROX-CHEMICALS LIMITED MARKETING, Department P. O. Box 7, WARRINGTON CHESHIRE WA4 6HB |
| ADDOTTO 02851 | versuchsweiser hydroxylierter Polyester von HOECHST SARA Spa, Hydroxylzahl = ca. 30, modifiziert mit 15 % Acrylpolymer |
| ADDOTTO 03002 | versuchsweiser hydroxylierter Poly ester von HOECHST SARA Spa, Hydroxylzahl = ca. 40, modifiziert mit ca. 15 % Acrylpolymer und wachshaltigem Netzmittel (6 %) |
| ADDOTTO 03003 | versuchsweiser hydroxylierter Polyester von HOECHST SARA Spa, Hydroxylzahl = ca. 40, modifiziert mit ca. 15 % Acrylpolymer und wachshaltigem Netzmittel (2 %). |
| ADDOTTO 03004 | versuchsweiser hydroxylierter Polyester von HOECHST SARA Spa, Hydroxylzahl = ca. 40, modifiziert mit ca. 15 % Acrylpolymer und Oxyethylen-Kondensat (2 %). |
| ALFTALAT AN 722 | carboxylierter Polyester mit Säurezahl 50 - 60, vermarktet durch HOECHST AG (BRD) |
| BECKOPOX EP 303 | Epoxidharz mit Epoxidäquivalent = ca. 800, vermarktet durch HOECHST AG (BRD) |
| BENZOIN | der RIEDEL DE HAEN AG, Seelze Hannover (BRD). |

FESTWEISS

LDPE-POLYETHYLEN MFI 2, Hochdruckpolyethylen

POLYVINYLCHLORID

POLYSTYROL IN KRISTALLFORM

**Herstellung von einpigmentigem Master**

Hier im folgenden sind als Beispiel einige im Labor hergestellte Formulierungen angegeben.

Das Zubereitungsverfahren ist in allen Fällen gleich. Die Schmelzzeiten der Massen und die Temperaturen der entsprechenden Schmelzen zeigen geringfügige Differenzen.

Zubereitungsverfahren:

Es erfolgt eine Vorstehend beschrieben und in der beigefügten Fig. 5 erläutert ist.

**Beispiel 1**

| Blauer Master P89/09A | |
|---|---|
| Pigment Blue 15:3 74160 | 40,0 Gewichtsteile |
| Addotto 02851 | 54,0 Gewichtsteile |
| Capa 231 | 6,0 Gewichtsteile |
| Gesamt | 100,0 Gewichtsteile |

**Beispiel 2**

| Gelber Master P88/45 | |
|---|---|
| Pigment Yellow 34 77600 | 70,0 Gewichtsteile |
| Addotto 03002 | 30,0 Gewichtsteile |
| Gesamt | 100,0 Gewichtsteile |

**Beispiel 3**

| Blauer Master P91/09 | |
|---|---|
| Pigment Blue 15:3 74160 | 40,0 Gewichtsteile |
| Laropal A81 | 60,0 Gewichtsteile |
| Gesamt | 100,0 Gewichtsteile |

**Beispiel 4**

| Weißer Master P88/44 | |
|---|---|
| Pigment White 6 77891 | 80,0 Gewichtsteile |
| Addotto 03002 | 20,0 Gewichtsteile |
| Gesamt | 100,0 Gewichtsteile |

**Beispiel 5**

| Blauer Master P89/09I | |
|---|---|
| Pigment Blue 15:3 74160 | 50,0 Gewichtsteile |
| Capa 231 | 6,0 Gewichtsteile |
| Addotto 02851 | 44,0 Gewichtsteile |
| Gesamt | 100,0 Gewichtsteile |

**Beispiel 6**

| Roter Master P88/41F | |
|---|---|
| Pigment Red 57:1 15850 | 40,0 Gewichtsteile |
| Addotto 03003 | 60,0 Gewichtsteile |
| Gesamt | 100,0 Gewichtsteile |

**Beispiel 7**

| Weißer Master P91/04 | |
|---|---|
| Pigment White 6 77891 | 80,0 Gewichtsteile |
| Addotto 03004 | 20,0 Gewichtsteile |
| Gesamt | 100,0 Gewichtsteile |

**Beispiel 8**

| Roter Master P91/05 | |
|---|---|
| Pigment Red 57:1 15850 | 50,0 Gewichtsteile |
| Addotto 03004 | 50,0 Gewichtsteile |
| Gesamt | 100,0 Gewichtsteile |

Die Arbeitsbedingungen sind aus der nachstehenden Tabelle Nr. 1 ersichtlich.

**Tabelle Nr. 1**

| Arbeits-bedingungen | Blau P89/09A | Gelb P88/45 | Blau P91/09 | Weiß P88/44 | Blau P89/09I | Rot P88/41F | Weiß P91/04 | Rot P91/05 |
|---|---|---|---|---|---|---|---|---|
| Drehzahl U/min | 2845 | 2845 | 2845 | 2845 | 2845 | 2845 | 2845 | 2845 |
| Leistungsbedarf am Anfang (A) | 5,5 | 5,5 | 5,5 | 5,5 | 5,5 | 5,5 | 5,5 | 5 |
| Leistungsbedarf am Schluß (A) | 18 | 18 | 14 | 13 | 20 | 14 | 13 | 13 |
| Schmelzzeit (min) | 80 | 80 | 50 | 90 | 120 | 130 | 120 | 150 |
| Schmelzen-temperatur (°C) | 108 | 98 | 165 | 93 | 110 | 160 | 164 | 170 |

**Herstellung von mehrpigmentigen Masters**

**Beispiel Nr. 9**

Roter Master P88/46A

Das Beispiel bezieht sich auf den typischen Fall eines Rezeptes für einen gewünschten Farbton, wo die Verfügbarkeit von mehrpigmentigen Masters benutzt wird.

Zubereitungsverfahren:

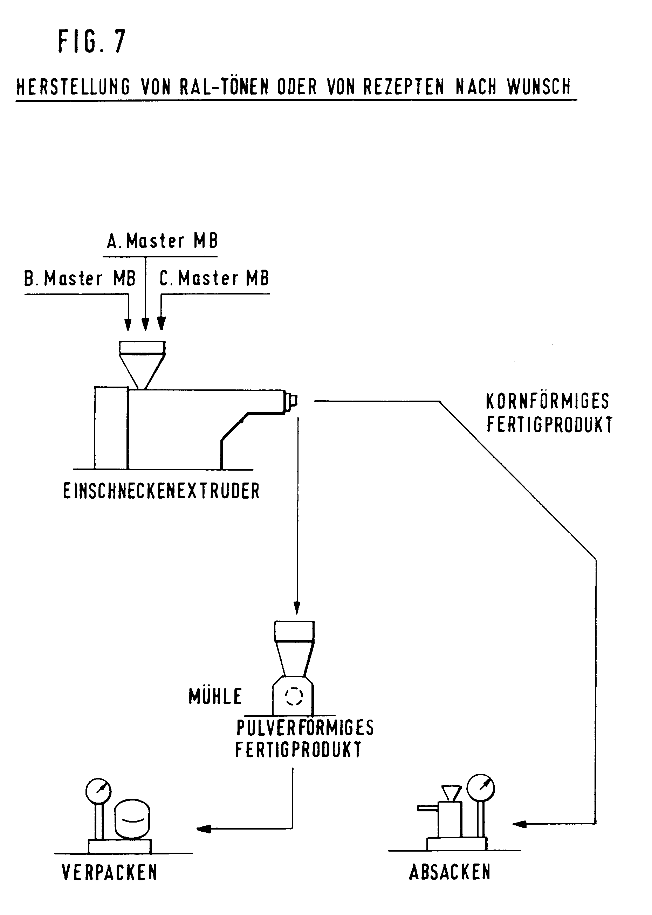

In einem Einschneckenextruder (s. beigefügte Fig. 7) wird die folgende Mastermischung bei ca. 100 ° C mit 50 U/min extrudiert:

| | |
|---|---|
| Weißer Master P88/44 | 69,0 Gewichtsteile |
| Roter Master P 88/41F | 11,0 Gewichtsteile |
| Gelber Master P88/45 | 20,0 Gewichtsteile |
| Gesamt | 100,0 Gewichtsteile |

**Herstellung eines Lacks aus Pigmenten (Beispiel A) bzw. aus Master (Beispiel B)**

Von Pigmenten ausgehende herkömmliche Technik
(Beispiel A)

(s. beigefügte Fig. 1)

| | |
|---|---|
| Alftalat AN 722 | 32,000 Gewichtsteile |
| Beckopox EP 303 | 22,000 Gewichtsteile |
| Benzoin | 0,500 Gewichtsteile |
| Festweiß-Füllung | 25,500 Gewichtsteile |
| Addotto 02851-Träger | 5,272 Gewichtsteile |

Pigmente:

| | |
|---|---|
| Pigment Yellow 34 77600 | 2,760 Gewichtsteile |
| Pigment Red 57:1 15850 | 1,096 Gewichtsteile |
| Pigment White 6 77891 | 10,872 Gewichtsteile |
| Gesamt | 100,000 Gewichtsteile |

Von Master ausgehendes erfindungsgemäßes Verfahren
(Beispiel B)

(s. beigefügte Fig. 2)

| | |
|---|---|
| Alftalat AN 722 | 32,000 Gewichtsteile |
| Beckopox EP 303 | 22,000 Gewichtsteile |
| Benzoin | 0,500 Gewichtsteile |
| Festweiß-Füllung | 25,500 Gewichtsteile |
| Master P 88/46A (Beispiel Nr.9) | 20,000 Gewichtsteile |
| Gesamt | 100,000 Gewichtsteile |

**Extrusion eines Lackes mit Pigmenten (Beispiel A)**

Die Lackbestandteile wurden in einem Henschel-Labormischer trocken und kalt gemischt und die Mischung wurde in zwei Teile geteilt:

A1) einTeil wurde mit einem BAKER PERKINS-Doppelschneckenextruder, Mod. MPC/V30 extrudiert
A2) ein Teil wurde mit einem WERNER PFLEIDERER-Doppelschneckenextruder, Mod. ZSK30 extrudiert.

| | Farbstärke (Teile) |
|---|---|
| Extrudat 1 | 100 |
| Extrudat 2 | 110 |

**Extrusion eines Lackes mit Master (Beispiel B)**

Die Lackbestandteile des Beispiels B wurden in einem Henschel-Labormischer trocken und kalt gemischt und die Mischung wurde in zwei Teile geteilt:

B1) ein Teil wurde mit einem BAKER PERKINS-Doppelschneckenextruder, Mod. MPC/V30 extrudiert

B2) ein Teil wurde mit einem WERNER PFLEIDERER-Doppelschneckenextruder, Mod. ZSK30 extrudiert

| | Farbstärke (Teile) |
|---|---|
| Extrudat B1 | 100 |
| Extrudat B2 | 100 |

Bemerkungen:

Beispiel A zeigt, daß bei Färbung mit Pigmenten die Farbstärke durch die Arbeitsbedingungen bzw. den Extrudertyp beeinflußt wird.

Beispiel B zeigt, daß bei Färbung mit Master die Farbstärke bei Verwendung von unterschiedlich konzipierten Extrudern den gleichen Wert aufweist.

| Farbvergleich der beschriebenen, mit Pigmenten oder Master gefärbten Lacke A und B | | | |
|---|---|---|---|
| | Mehrpigmentige Töne | | |
| | Rot P88/53 | | |
| | Farbstärke (Teile) | Delta E 1*a*b* | Delta H 1*a*b* |
| Zubereitung des Lackes A mit Pigmenten | 100 | = = | = = |
| Zubereitung des Lackes B mit Pigmenten | 80 | 3.36 | 2.71 |

Ergebnis:

Dadurch ist also bewiesen, daß die Färbung mit erfindungsgemäß hergestellten Masters eine um 20 Teile höhere Farbstärke als die herkömmliche Färbung mit Pigmenten ergibt und nicht durch den Typ des verwendeten Extruders beeinflußt wird.

**Veranschaulichung der Masteranwendung in Kunststoffen**

**Beispiel Nr. 10**

| Einfärben von Weich-PVC auf Zweiwalzenstuhl (Fertigprodukt Folien) | |
|---|---|
| Gelber Master P88/45 | 1,5 Gewichtsteile |
| Weich-PVC | 98,5 Gewichtsteile |
| Gesamt | 100,0 Gewichtsteile |

Beispiel Nr. 11

| Einfärben von HDPE durch Spritzgießen | |
|---|---|
| Blauer Master P98/09C | 2,5 Gewichtsteile |
| HDPE MFI 17 | 97,5 Gewichtsteile |
| Gesamt | 100,0 Gewichtsteile |

Beispiel Nr. 12

| Einfärben von PS-Kristallen durch Spritzgießen | |
|---|---|
| Schwarzer Master P88/67D | 2,0 Gewichtsteile |
| PS-Kristall | 98,0 Gewichtsteile |
| Gesamt | 100,0 Gewichtsteile |

Beispiel Nr. 13

| Einfärben von LDPE durch Blasextrusion (Foliendicke 25 $\mu$m) | |
|---|---|
| Weißer Master P88/44 | 10,0 Gewichtsteile |
| LDPE MFI 2 | 90,0 Gewichtsteile |
| Gesamt | 100,0 Gewichtsteile |

**Patentansprüche**

1. Verfahren zur Herstellung von hochkonzentrierten, hochdispergierten Pigmentkonzentraten (Masters) mit höchster erreichbarer Farbstärke, dadurch gekennzeichnet, daß eine Mischung aus (A) einem oder mehreren Pigmenten (B) einem oder mehreren Netzmitteln und (C) einem oder mehreren Polymerträgern in einem "adiabatischen" Schnellmischer mit stufenlos regelbarer Geschwindigkeit während einer bestimmten Zeit hohen Scherkräften unterzogen wird, bis die Komponenten (B) und (C) durch die erzeugte Reibungswärme vollständig geschmolzen sind und die Farstärke auf den höchst möglichen Wert gebracht worden ist.

2. Verfahren nach Anspruch 1, dadurch gekennzeichnet, daß die Konzentration von (A) bei organischen Pigmenten bis zu 65 % und bei anorganischen Pigmenten bis zu 85 % liegt.

3. Verfahren nach Anspruch 1, dadurch gekennzeichnet, daß der Anteil eines Netzmittels oder mehrerer Netzmittel bis zu 75 % beträgt.

4. Verfahren nach Anspruch 1, dadurch gekennzeichnet, daß die Netzmittel (B)) aus einem oder mehreren der nachstehend aufgeführten Reaktionsprodukte und/oder deren Mischungen bestehen:
   a) Gesättigte und/oder ungesättigte Fettalkohole mit 6 - 20 Kohlenstoffatomen, die mit 6 - 70 Mol Ethylen- und/oder und/oder Propylenoxid reagiert haben.
   b) Gesättigte und/oder ungesättigte Fettsäuren mit 14 - 20 Kohlenstoffatomen, die mit 6 - 70 Mol Ethylen- und/oder Propylenoxid reagiert haben.
   c) Natürliche Harzsäuren, die mit 2 - 80 Mol Ethylen- und/oder Propylenoxid reagiert haben.
   d) Gesättigte und/oder ungesättigte Fettamine mit 14 - 20 Kohlenstoffatomen, die mit 6 - 70 Mol Ethylenoxid und/oder Propylenoxid je Aminogruppe reagiert haben.
   e) Reaktionsprodukte aus Alkylendiaminen mit 2 - 5 Kohlenstoffatomen und Ethylen- und/oder Propylenoxid im Verhältnis von 25 - 120 Mol je Amingruppe.

13

f) Reaktionsprodukte, dargestellt aus Glykolen und/oder Polyolen mit 4 - 10 Kohlenstoffatomen und Ethylen- und/oder Propylenoxid, mit Molekulargewichten von 200 bis 4.000.

g) Caprolactamderivate die Hydroxyl- und/oder Carboxylgruppen enthalten, mit einem Molekulargewicht von 200 bis 50.000.

h) Reaktionsprodukte aus Tri- und/oder Di- und/oder Monoglyceriden und 6 - 120 Mol, je Hydroxylgruppe, Ethylenoxid- und/oder Propylenoxid.

i) Reaktionsprodukte aus Hydroxylsäuren mit 5 - 20 Kohlenstoffatomen und/oder deren Salze und 0 - 70 Mol Ethylenoxid- und/oder Propylenoxid je Hydroxylgruppe.

j) Reaktionsprodukte aus Alkylphenolen mit 12 - 24 Kohlenstoffatomen und 4 - 25 Mol Ethylenoxid je Phenolgruppe.

k) Ammonium- oder Natriumalkylsulfonate und-alkylbenzolsulfonate.

l) Sulfosuccinatverbindungen.

m) Reaktionsprodukte aus Aminoalkoholen mit 2 - 20 Kohlenstoffatomen und 1 - 180 Mol Ethylen- und/oder Propylenoxid.

n) Reaktionsprodukte aus Aminosäuren und/oder deren Ester mit 2 - 70 Mol Ethylen- und/oder Propylenoxid.

o) Salze aus Diaminen und Monocarbonsäuren mit 14 - 20 Kohlenstoffatomen in der Kette.

p) Quartäre Ammoniumsalze (vorzugsweise Chlorid, Bromid, Iodid) aus aliphatischen Aminen mit 8 - 20 Kohlenstoffatomen.

q) Montansäuren mit 24 - 36 Kohlenstoffatomen in der Kette, und/oder deren Ester mit Ethandiol und/oder Butandiol und/oder Glycerin und/oder Pentaerythrit und/oder deren Calciumsalze.

r) Polyamidwachse, oxidierte und nicht oxidierte Polyethylenwachse, Polypropylenwachse, oxidierte und nicht oxidierte, auch durch Fischer-Tropsch-Synthese gewonnene Kohlenwasserstoffwachse.

s) Acrylhomoplymere.

t) Fluorpolymere

u) Gesättigte und/oder ungesättigte Fettsäureamide mit 14 - 22 Kohlenstoffatomen in der Kette.

v) Salze von Fettsäuren und Fettaminen aus dem gleichen Säureradikal mit 8 - 22 Kohlenstoffatomen (elektrisch neutrale Salze).

5. Verfahren nach Anspruch 1, dadurch gekennzeichnet, daß der Anteil des Polymerträgers bis zu 75 % beträgt.

6. Verfahren nach Anspruch 1, dadurch gekennzeichnet, daß der Polymerträger aus folgenden Stoffen besteht:

a) Acrylcopolymere, die im Molekül eine oder mehrere Carboxyl-, Hydroxyl-, Amin-, Alkylamin-, Mercaptan-, Phosphonat-, Phosphit-, Phosphat-, Nitroso-, Al-Chelat- oder Fluor-Gruppen enthalten können;

b) Polyester, Polyether, Polyurethane, Triazin- und Aldehyddderivate, eventuell mit Gruppen wie unter a);

gegebenenfalls in Mischung mit:

c) gewöhnlich in Lacken und Kunststoffen eingesetzten Hilfsmitteln, Verlaufmitteln, Antistatika, UV-Adsorbern, Antioxidantien, Entgasungsmitteln und Gleitmitteln.

7. Verfahren nach Anspruch 1, dadurch gekennzeichnet, daß die gewonnenen Masters zum Einfärben von pulverförmigen und flüssigen Lacken sowie von Kunststoffen und Druckfarben verwendet werden.

8. Verfahren zur Herstellung von mehrpigmentigen Masterbatches mit vorgegebenem gemischten Farbton dadurch gekennzeichnet, daß die nach Anspruch 1 gewonnenen einpigmentigen Masterbatches in einem Einschneckenextruder einer Homogenisierung unterzogen werden.

9. Verfahren nach Anspruch 1, dadurch gekennzeichnet, daß der "adiabatische" Schnellmischer aus einem dicht verschließbaren Hohlkörper zur Aufnahme der Masse besteht, in dem sich ein von einem starken Elektromotor angetriebener Propeller- oder Schaufelrührer mit zweckmäßig orientierten Schaufeln und mit stufenlos veränderbarer Drehzahl befindet.

**Claims**

1. A process for the preparation of highly concentrated, highly dispersed pigment concentrates (masters) having the maximum achievable tinting strength, wherein a mixture of (A) one or more pigments, (B) one or more wetting agents, and (C) one or more polymer carriers is introduced into an "adiabatic" high-speed mixer of continuously adjustable speed, and this mixture is subjected to high shear forces for a certain time until the components (B) and (C) have completely been melted due to the heat friction generated and the highest possible tinting strength has been reached.

2. The process as claimed in claim 1, wherein the concentration of (A) is 65 % in the case of organic pigments and 85 % in the case of inorganic pigments.

3. The process as claimed in claim 1, wherein the proportion of a wetting agent or several wetting agents is 75 %.

4. The process as claimed in claim 1, wherein the wetting agents (B) comprise one or more of the reaction products listed below, and/or mixtures thereof:
   a) saturated and/or unsaturated fatty alcohols having 6-20 carbon atoms, which have reacted with 6-70 mol of ethylene oxide and/or propylene oxide;
   b) saturated and/or unsaturated fatty acids having 14-20 carbon atoms, which have reacted with 6-70 mol of ethylene oxide and/or propylene oxide;
   c) natural resin acids which have reacted with 2-80 mol of ethylene oxide and/or propylene oxide;
   d) saturated and/or unsaturated fatty amines having 14-20 carbon atoms, which have reacted with 6-70 mol of ethylene oxide and/or propylene oxide per amino group;
   e) reaction products of alkylenediamines having 2-5 carbon atoms and ethylene oxide and/or propylene oxide in the ratio of 25-120 mol per amino group;
   f) reaction products of glycols and/or polyols having 4-10 carbon atoms and ethylene oxide and/or propylene oxide having a molecular weight of from 200 to 4,000;
   g) caprolactam derivatives which contain hydroxyl and/or carboxyl groups and have a molecular weight of from 200 to 50,000;
   h) reaction products of triglycerides and/or diglycerides and/or monoglycerides and 6-120 mol of ethylene oxide and/or propylene oxide per hydroxyl group;
   i) reaction products of hydroxy acids having 5-20 carbon atoms and/or salts thereof, and 0-70 mol of ethylene oxide and/or propylene oxide per hydroxyl group;
   j) reaction group of alkylphenols having 12-24 carbon atoms and 4-25 mol of ethylene oxide per phenol group;
   k) ammonium or sodium alkylsulfonates and alkylbenzenesulfonates;
   l) sulfosuccinate compounds;
   m) reaction products of amino alcohols having 2-20 carbon atoms and 1-80 mol of ethylene and/or propylene oxide;
   n) reaction products of amino acids and/or esters thereof having 2-70 mol of ethylene oxide and/or propylene oxide;
   o) diamine salts and monocarboxylic acids having 14-20 carbon atoms in the chain;
   p) guarternary ammonium salts (preferably chloride, bromide, iodide) made from aliphatic amines having 8-20 carbon atoms;
   q) montanic acids having 24-36 carbon atoms in the chain and/or esters thereof with ethanediol and/or butanediol and/or glycerol and/or pentaerythritol and/or calcium salts thereof;
   r) polyamide waxes, oxidized and unoxidized polyethylene waxes, polypropylene waxes, oxidized and unoxidized hydrocarbon waxes, including those obtained by the Fischer-Tropsch synthesis;
   s) acrylic homopolymers;
   t) fluoro polymers;
   u) saturated and/or unsaturated fatty acid amides having 14-22 carbon atoms in the chain;
   v) salts of fatty acids and fetty amines made from the same acid radical having 8-22 carbon atoms (electrically neutral salts);

5. The process as claimed in claim 1, wherein the proportion of th polymer carrier is up to 75 %;

6. The process as claimed in claim 1, wherein the polymer carrier comprises the following substances:

a) acrylic copolymers which may contain per molecule one or more of carboxyl, hydroxyl, amino, alkylamino, mercaptane, phosphonate, phosphite, phosphate, nitroso, aluminium chelate or fluorine groups;

b) polyesters, polyethers, polyurethanes, and triazine and aldehyde derivatives, possibly containing groups as mentioned under a);

optionally in mixtures with:

c) auxiliaries usually employed in paints and plastics, levelling agents, antistatics, UV adsorbers, antioxidants, degassing agents, and lubricants;

7. The process as claimed in claim 1, wherein the masters obtained are used to color pulverulent and liquid paints and plastics and printing inks;

8. Process for the preparation of multipigment master-batches having a prespecified mixed shade, wherein the single pigment masterbatches obtained as claimed in claim 1 are subjected to homogenizing in a single-screw extruder;

9. Process as claimed in claim 1, wherein the "adiabatic" high-speed mixer consists of a tightly sealable hollow element for receiving the composition, the hollow element containing a propeller or paddle stirrer with expediently aligned paddles and a continuously adjustable speed which is driven by a powerful electric motor.

**Revendications**

1. L'invention concerne un procédé pour la préparation de concentrés de pigments très dispersés, très concentrés (Masters) avec un pouvoir colorant le plus élevé que l'on peut atteindre, caractérisé en ce qu'on soumet un mélange (A) d'un ou plusieurs pigments, (B) d'un ou plusieurs agents mouillants et (C) d'un ou plusieurs supports polymères dans un mélangeur rapide "adiabatique" à vitesse réglable en continu pendant un temps déterminé, à des forces de cisaillement élevées, jusqu'à ce que les constituants (B) et (C) soient entièrement fondus par la chaleur de frottement dégagée et le pouvoir colorant soit portée à sa valeur la plus élevée possible.

2. Procédé selon la revendication 1, caractérisé en ce que la concentration en (A) pour des pigments organiques va jusqu'à 65% et pour les pigments minéraux jusqu'à 85%.

3. Procédé selon la revendication 1, caractérisé en ce que la teneur en un ou plusieurs agents mouillants va jusqu'à 75%.

4. Procédé selon la revendication 1, caractérisé en que les agents mouillants (B) se composent d'un ou plusieurs produits de réaction et/ou de leurs mélanges indiqués ci-après :

a) Alcools gras saturés et/ou insaturés avec 6 à 20 atomes de carbone, qui ont réagi avec 6 à 70 moles d'oxyde d'éthylène et/ou d'oxyde de propylène.

b) Acides gras saturés et/ou insaturés avec 14 à 20 atomes de carbone qui ont réagi avec 6 à 70 moles d'oxyde d'éthylène et/ou d'oxyde de propylène.

c) Acides résiniques naturels qui ont réagi avec 2 à 80 moles d'oxyde d'éthylène et/ou d'oxyde de propylène.

d) Amines grasses saturées et/ou insaturées avec 14 à 20 atomes de carbone, qui ont réagi avec 6 à 70 moles d'oxyde d'éthylène et/ou d'oxyde de propylène par groupe amino.

e) Produit de réaction des alkylène-diamines avec 2 à 5 atomes de carbone et de l'oxyde d'éthylène et/ou de l'oxyde de propylène dans un rapport de 25 à 120 moles par groupe amino.

f) Produits de réaction préparés à partir de glycols et/ou de polyols avec 4 à 10 atomes de carbone et d'oxyde d'éthylène et/ou d'oxyde de propylène, avec des poids moléculaires de 200 à 4000.

g) Dérivés de caprolactame, qui contiennent des groupes hydroxyles et/ou carboxyles avec un poids moléculaire de 200 à 50000.

h) Produits de réaction des tri- et/ou di- et/ou monoglycérides et de 6 à 120 moles par groupe hydroxyle, d'oxyde d'éthylène et/ou d'oxyde de propylène.

i) Produits de réaction des acides hydroxyliques avec 5 à 20 atomes de carbone et/ou leurs sels et de 0 à 70 moles d'oxyde d'éthylène et/ou d'oxyde de propylène par groupe hydroxyle.

j) Produits de réaction à partir d'alkylphénols avec 12 à 24 atomes de carbone et 4 à 25 moles d'oxyde d'éthylène par groupe phénol.

k) Alkylsulfonates et alkylbenzènesulfonates d'ammonium ou de sodium.

l) Composés de sulfosuccinates.

m) Produits de réaction des aminoalcools avec 2 à 20 atomes de carbone et 1 à 180 moles d'oxyde d'éthylène et/ou d'oxyde de propylène.

n) Produits de réaction d'acides aminés et/ou de leurs esters avec 2 à 70 moles d'oxyde d'éthylène et/ou d'oxyde de propylène.

o) Sels de diamines et d'acides monocarboxyliques avec 14 à 20 atomes de carbone dans la chaîne.

p) Sels d'ammonium quaternaire (de préférence le chlorure, le bromure, l'iodure) des amines aliphatiques avec 8 à 20 atomes de carbone.

q) Acides montaniques avec 24 à 36 atomes de carbone dans la chaîne et/ou leurs esters avec l'éthanediol et/ou le butanediol et/ou la glycérine et/ou le pentaérythritol et/ou leurs sels de calcium.

r) Cires de polyamides, cires de polyéthylènes oxydées et non oxydées, cires de polypropylènes oxydées et non oxydées ainsi que les cires d'hydrocarbures obtenues par la synthèse de Fischer-Tropsch.

s) Homopolymères acryliques.

t) Polymères fluorés.

u) Amides d'acides gras saturés et/ou insaturés avec 14 à 22 atomes de carbone dans la chaîne.

v) Sels des acides gras et des amines grasses à partir du même radical d'acides avec 8 à 22 atomes de carbone (sels électriquement neutres).

5. Procédé selon la revendication 1 caractérisé en ce que la teneur en supports polymères va jusqu'à 75%.

6. Procédé selon la revendication 1, caractérisé en ce que le support polymère se compose des matières suivantes :

a) Copolymères acryliques qui peuvent contenir dans la molécule un ou plusieurs groupes carboxyle, hydroxyle, amine, alkylamine, mercaptan, phosphonate, phosphite, phosphate, nitroso, Al-chelate ou fluor ;

b) Polyesters, polyéthers, polyuréthannes des dérivés de triazines et des aldéhydes, éventuellement en mélange avec des groupes indiqués dans le point a) éventuellement en mélange avec :

c) des adjuvants, des agents de nivellisation, des antistatiques, des adsorbants d'UV, des anti-oxydants, des agents de dégazage et des agents de démoulage usuels dans les vernis et les matières plastiques.

7. Procédé selon la revendication 1, caractérisé en ce qu'on utilise les Masters obtenus pour la coloration de vernis en poudre et liquides ainsi que de matières plastiques et des encres d'imprimerie.

8. Procédé pour la préparation de mélanges-maîtres à plusieurs pigments avec une nuance mélangée pré-indiquée caractérisée en ce que le mélange-maître à un pigment obtenu dans la revendication 1 est soumis à une homogénéisation dans une extrudeuse monivis.

9. Procédé selon la revendication 1, caractérisé en ce que le mélangeur rapide "adiabatique" se compose d'un corps creux à fermeture étanche pour accueilir la masse, dans lequel se trouve un agitateur à hélice ou à aubes, actionné par moteur électique puissant, avec des aubes orientées de façon appropriée et avec un nombre de tours que l'on peut modifier en continu.

# FLUSSBILD FÜR DIE HERSTELLUNG VON PULVERLACKEN

Pigmente

WÄGEN

MISCHEN

Rohstoffe

FIG.1

EXTRUDIEREN

MAHLEN  SIEBEN  VERPACKEN

EP 0 519 993 B1

# FLUSSBILD FÜR DIE HERSTELLUNG VON PULVERLACKEN AUS MASTER

MISCHEN    Master    Rohstoffe

FIG. 2

EXTRUDIEREN    MAHLEN    SIEBEN    VERPACKEN

## FIG.3

FARBSTÄRKENENTWICKLUNG IM PIGMENT

EP 0 519 993 B1

FARBSTÄRKENENTWICKLUNG IM MASTER

## FIG. 4

EP 0 519 993 B1

NACH DER BEANSPRUCHTEN TECHNOLOGIE HERGESTELLTE MASTERBATCHES

## FIG.5

A. Pigment
B. Träger
C. Netzmittel
SCHNELLMISCHER
MÜHLE
PULVERFÖRMIGES FERTIGPRODUKT
EINSCHNECKENEXTRUDER
KORNFÖRMIGES FERTIGPRODUKT
VERPACKEN
ABSACKEN

FIG.6

FARBSTÄRKENENTWICKLUNG

% FARBSTÄRKE

KONZENTRATION

★ Green 7 74260    + Blu 15:3 74160    ✳ Red 57:1 15850

# FIG. 7

## HERSTELLUNG VON RAL-TÖNEN ODER VON REZEPTEN NACH WUNSCH

A. Master MB

B. Master MB   C. Master MB

EINSCHNECKENEXTRUDER

KORNFÖRMIGES
FERTIGPRODUKT

MÜHLE

PULVERFORMIGES
FERTIGPRODUKT

VERPACKEN

ABSACKEN